# EUROPÄISCHE PATENTANMELDUNG

(11) **EP 1 162 134 A1**
(43) Veröffentlichungstag der Anmeldung: **12.12.2001**
(21) Anmeldenummer: 01202166.3
(22) Anmeldetag: 06.06.2001
(51) Int. Cl.: B62K 27/00, B62B 1/00

(54) **Mehrzweckförderkarren**

(30) Priorität: 07.06.2000 NL 1015392
(71) Anmelder: Woudengroep, 9207 AM Drachten (NL)
(72) Erfinder: Halma, Ronald Pieter, 8915 BS Leeuwarden (NL)
(74) Vertreter: Prins, Adrianus Willem

(57) **Zusammenfassung**

Förderkarren, versehen mit einem Bodenteil (1) mit zwei auf eine Hauptachse (2) montierten Haupträdern (3) und einer Kupplungsstange (51), die einerseits mit dem Bodenteil (1) verbunden ist und andererseits ein Ende mit Anfaßmitteln (9) aufweist, die mit einer Hand angefaßt werden können oder mit Organen kuppelbar sind, die mit einem Fördermittel, wie ein Fahrrad, verbunden sind. Die Kupplungsstange (5) trägt ein Stützorgan (7) und ist schwenkbar um eine Achse zwischen einer ausgeklappten Stellung, wobei das Stützorgan einen ergänzenden Stützpunkt bildet, und einer hochgeklappten Stellung, wobei das Stützorgan sich in einer in Richtung des Bodenteiles geschwenkten Stellung befindet. Die Verlängerung der Schwenkachse schneidet oder kreuzt die Hauptachse und liegt vorzugsweise in einer sich wenigstens nahezu lotrecht zur Hauptachse erstreckenden Ebene. Weiter ist das Stützorgan über einen sich quer zur Schwenkachse erstreckenden, stangenförmigen Teil mit der Kupplungsstange verbunden.

## Beschreibung

Die Erfindung bezieht sich auf einen Förderkarren, versehen mit einem Bodenteil mit zwei auf eine Hauptachse rotierbar montierten Haupträdern und einer Kupplungsstange, die einerseits mit dem Bodenteil verbunden ist und andererseits ein Ende aufweist, das, um den Förderkarren fortbewegen zu können, mit Anfaßmitteln versehen ist, die mit einer Hand angefaßt werden können oder mit Organen kuppelbar sind, die mit einem Fördermittel, wie ein Fahrrad, verbunden sind, welche Kupplungsstange ein Stützorgan trägt und um eine Achse schwenkbar ist zwischen einer ausgeklappten Stellung, wobei das Stützorgan einen ergänzenden Stützpunkt bildet, und einer hochgeklappten Stellung, wobei das Stützorgan sich in einer relativ zu seiner Position in der ausgeklappten Stellung in Richtung des Bodenteiles geschwenkten Stellung befindet.

Ein derartiger Förderkarren ist aus US-A 5.308.096 bekannt. Die Kupplungsstange dieses bekannten Förderkarrens ist nahe ihrer Verbindung mit dem Bodenteil zu einem Teil abgebogen ist, der eine sich im wesentlichen parallel zur Hauptachse erstreckende Schwenkachse bildet und ein Stützorgan in Form eines sich lotrecht zur Schwenkachse erstreckenden Schenkels mit Stützrad trägt. In der hochgeklappten Stellung erstreckt der Schenkel sich etwa rückwärts in Richtung der Hauptachse und liegt das Stützrad gegen die Unterseite des Bodenteiles. Dies bedeutet, daß nur ein Stützrad mit relativ kleinem Durchmesser angewendet werden kann. Weiter muß die Kupplungsstange, bevor sie um einen Winkel in der Größenordnung von 90° in die hochgeklappte Stellung gebracht wird, hochgeschwenkt werden, um den Schenkel in eine im wesentlichen vertikale Stützstellung zu bringen. Eine derart weit hochgeschwenkte Kupplungsstange erschwert die Handbedienung. Weiter muß die Kupplungsstange in beiden Endstellungen mit aktiv betätigten Verriegelungsmitteln gesichert werden. Das ist nicht nur umständlich durch nahe und unter dem Bodenteil auszuführende Handlungen, sondern stellt auch besondere Anforderungen an diese Verriegelungsmitteln. Denn eine Förderbelastung des Karrens in der Fahrradstellung, das heißt mit hochgeklapptem Schenkel, muß vollständig durch die Verriegelungsmittel aufgenommen werden. Ein Spiel in den Verriegelungsmitteln bedeutet, daß der Förderkarren durchhängt oder zusätzliche Schwingungen erfährt, während, und vielleicht durch diese Schwingungen verursacht, ein Zusammenbruch der Verriegelungsmittel bedeutet, daß der Förderkarren an der Stelle der Verbindung zwischen dem Bodenteil und der Kupplungsstange durchklappt, mit allen sich daraus ergebenden gefährlichen und nachteiligen Folgen.

Mit der Erfindung wird bezweckt, die mit dem bekannten Stand der Technik verbundenen Nachteile zu beseitigen und einen zuverlässigen Förderkarren vorzusehen, der schnell und einfach von seiner einen in die andere Gebrauchsstellung zu bringen ist.

Dies wird nach der Erfindung bei einem Förderkarren der eingangs beschriebenen Art erreicht, wenn die Verlängerung der Schwenkachse der Kupplungsstange die Hauptachse schneidet oder kreuzt und das Stützorgan über einen sich quer zur Schwenkachse erstreckenden, stangenförmigen Teil mit der Kupplungsstange verbunden ist. Durch diese Maßnahmen ist mit einer einfachen Drehung der Kupplungsstange um ihre Schwenkachse, insbesondere wenn nach einer weiteren Vorzugsausführungsform der Erfindung die Schwenkachse der Kupplungsstange in einer Ebene gelegen ist, die sich wenigstens nahezu lotrecht zur Hauptachse erstreckt, das Stützorgan aus der hochgeklappten Stellung in die ausgeklappte Stellung und umgekehrt zu bringen, welche Handlung im Stehen, und im wesentlichen ohne sich zu bücken, auszuführen ist. Dabei weist dann die Kupplungsstange im wesentlichen stets in eine vom Förderkarren abgekehrte Richtung, wodurch in beiden Gebrauchsstellungen optimale Bedienungsmöglichkeiten erhalten werden. Weiter gibt der sich quer zur Schwenkachse erstreckende Teil durch Abstützen gegen das Bodenteil sowohl in der ausgeklappten als auch in der hochgeklappten Stellung die Möglichkeit, automatisch eine stabile Anschlagstellung zu erhalten.

Wenn nach einer weiteren Ausführungsform der Erfindung die Schwenkachse gelegen ist in einer Ebene wenigstens nahezu parallel zu und zwischen einer Mittellotebene zwischen den zwei Haupträdern und einer Ebene durch eines der zwei Haupträder, fördert eine Belastung des Förderkarrens das Drücken gegen und in die ausgeklappte Stellung, während in der hochgeklappten Stellung nur ein Moment, geliefert durch das Gewicht des hochgeklappten Stützorgans, aufgenommen zu werden bracht, um die Kupplungsstange in dieser Stellung zu halten. Zugleich ist dann in einfacher Weise zu bewirken, daß das Stützorgan sich in der ausgeklappten Stellung etwa in einer Ebene befindet, die mit einer Mittellotebene zwischen den zwei Haupträdern zusammenfällt und in der hochgeklappten Stellung ein Ende aufweist, das im wesentlichen neben dem Bodenteil gelegen ist. Alsdann wird in der ausgeklappten Stellung eine stabile, optimale Dreipunktaufhängung des Förderkarrens erhalten, während in der hochgeklappten Stellung das Anordnen des Endes des Stützorgans am Bodenteil vorbei insbesondere dann Vorteile bietet, wenn das Stützorgan an seinem Ende mit einer verbreiterten Schenkelteil versehen ist.

Wenn, wie bevorzugt, das Stützorgan als ergänzender Stützpunkt ein Stützrad trägt, ist es beim seitlichen Wegklappen des Stützorgans ohne Probleme möglich, ein Stützrad mit einem relativ großen Durchmesser anzuwenden. Dadurch, daß dann nach einer weiteren Ausführungsform der Erfindung vorgesehen wird, daß das Ende des Stützorgans in der hochgeklappten Stellung sich in einer Ebene befindet, die im wesentlichen parallel ist oder zusammenfällt mit einer Ebene durch eines der beiden Haupträder, ist ein derartiges Stützrad in der um etwa 180° zur ausgeklappten Stellung geschwenkten, hochgeklappten Stellung prominent in die Sicht seitlich des Bodenteiles zu stellen, wodurch dieses Stützrad in ästhetischer Weise in der gesamten Formgebung des Förderkarrens aufzunehmen ist, während sofort die Wirkung der Kupplungsstange gut sichtbar ist.

Nach der Erfindung wird ein besonderer Vorzug dafür ausgesprochen, daß die Schwenkachse durch eine durch das Bodenteil getragene Schwenklagerhülse bestimmt wird und die Kupplungsstange versehen ist mit einem stangenförmigen Tragteil, das das Stützorgan trägt, einem stangenförmigen Bedienungsteil, das in Längsrichtung an das Tragteil anschließt, einem stangenförmigen Verbindungsteil, das sich im wesentlichen lotrecht zu dem Tragteil und dem Bedienungsteil erstreckt an der Stelle, wo diese Teile aneinander anschließen, und einer Schwenkachse, die sich im wesentlichen lotrecht zum Verbindungsteil erstreckt und zusammen mit diesem eine Ebene bestimmt, mit der das Tragteil einen Winkel einschließt, sowie drehbar in die Schwenklagerhülse paßt. Durch diese Ausführung insbesondere der Kupplungsstange ist durch den Winkel zwischen der Schwenkachse und dem Tragteil das Stützorgan in der ausgeklappten Stellung in eine steilere, abwärts geneigte Stellung zu bringen als die Schwenkachse, während in der um 180° geschwenkten, hochgeklappten Stellung das Stützorgan sich in einer steileren, aufwärts geneigten Stellung befindet, wobei das Verbindungsteil durch das Anschlagen gegen das Bodenteil die beiden äußersten Klappstellungen bestimmt und in zuverlässiger Weise aufrechterhält.

Letzterer Effekt kann noch gefördert werden, wenn das Verbindungsteil ein Befestigungsorgan trägt, mit dem die Kupplungsstange in ihren beiden äußersten Schwenkstellungen am Bodenteil befestigt werden kann, wobei diese ergänzende Verbesserung des Haltens der Kupplungsstange in einer der beiden äußersten Stellungen in automatischer Weise zustande zu bringen ist, wenn das Befestigungsorgan eine federnde Klemme ist, die mit zwei gegenüberliegenden, federnden Klemmarmen versehen ist, die je mit jeweils einem am Bodenteil angebrachten Nocken zusammenwirken können.

Um beim Anbringen einer dezentral angeordneten Schwenkachse dennoch eine zentral ausgeübte Zug- oder Druckkraft auf den Förderkarren ausüben zu können, verdient es nach einer weiteren Ausführungsform der Erfindung den Vorzug, daß das Bedienungsteil einen stumpfen Winkel mit dem Tragteil einschließt und sich von seinem Anschluß an das Tragteil über eine solche Länge in einer solchen Richtung erstreckt, daß das Bedienungsteil in einem Ende endigt, das relativ zum Tragteil an der Schwenkachse vorbei in Richtung der Mittellotebene gelegen ist. Zugleich ist dann zu bewirken, daß nicht nur das Tragteil, sondern auch das Bedienungsteil in der ausgeklappten Stellung anders gerichtet ist als in der hochgeklappten Stellung. In der hochgeklappten Fahrradzugstellung nimmt das Bedienungsteil vorzugsweise eine ziemlich flache, horizontale Stellung ein, so daß dieses Teil zum Beispiel mit der Hinterachse des Fahrrades gekuppelt werden kann. In der ausgeklappten Stellung kann das Bedienungsteil dann eine steilere Stellung einnehmen, um den Förderkarren bequem mit der Hand fortbewegen zu können.

Das Begrenzen der Schwenkbewegung der Kupplungsstange in den beiden äußersten Stellungen ist in einfacher Weise zu bewirken, wenn die Schwenklagerhülse an einer unteren Fläche des Bodenteiles befestigt ist, welches Bodenteil die Anschläge zum Begrenzen der Schwenkbewegung der Kupplungsstange vorsieht. Wird es jedoch gewünscht, daß die Formgebung der unteren Fläche des Bodenteiles ganz unabhängig von der Anschlagbestimmung der Kupplungsstange ist, dann kann nach einer weiteren Ausführungsform der Erfindung vorgesehen sein, daß ein Ende der Schwenklagerhülse in einen Durchbruch eines Schenkels eines U-förmigen Profils ausmündet, das wenigstens nahezu quer zur Mittellotebene am Bodenteil befestigt ist und sich an beiden Seiten der Ausmündung der Schwenklagerhülse über eine Länge erstreckt, die kleiner ist als die des Verbindungsteiles, das einen in das U-förmige Profil passenden Querschnitt aufweist. Diese Lösung hat den weiteren Vorteil, daß stets deutlich definierte, stabile, robuste und optimal dimensionierte Anschläge vorhanden sind.

Das Arretieren der Kupplungsstange in den beiden äußersten Stellungen ist dabei zu fördern, wenn das Verbindungsteil an seinem Außenumfang ein Organ aus einem elastischen Material trägt, mit dem das Verbindungsteil in beiden äußersten Schwenkstellungen der Kupplungsstange klemmend im U-Profil zu befestigen ist, wodurch die Kupplungsstange in beiden Endstellungen klemmend reibend gesichert und jedes Spiel beseitigt wird.

Um das Fortbewegen des Förderkarrens mit der Hand zu erleichtern und angenehmer zu gestalten, ohne daß dies in der Fahrradzustellung zu Problemen führen kann, wird nach einer weiteren Ausführungsform der Erfindung vorgeschlagen, daß die Anfaßmittel einen Handgriff umfassen, der schwenkbar ist zwischen einer verriegelbaren, eingeklappten Stellung, in der der Handgriff sich im wesentlichen parallel zum Bedienungsteil erstreckt, und einer ausgeklappten Stellung, in der der Handgriff sich unter einem Winkel zum Bedienungsteil erstreckt. Um dabei zu vermeiden, daß der Handgriff die Verwendung des Förderkarrens in der Stellung, in der er von einem Fördermittel fortgewegt wird, hindern kann, ist nach einer weiteren Ausführungsform der Erfindung vorgesehen, daß die Anfaßmittel weiter eine Fördermittelkupplung umfassen, die nur wirksam sein kann, wenn der Handgriff sich in der eingeklappten Stellung befindet, und der Handgriff sowohl in der eingeklappten als auch in der ausgeklappten Stellung verriegelt.

Um die Klappkonstruktion in optimaler Weise mit der Gebrauchsfunktion des Förderkarrens kombinieren zu können, wird weiter ein Vorzug dafür ausgesprochen, daß das Bodenteil mit einem stangenförmigen Rahmenteil und einem durch dieses getragenen kastenförmigen Teil versehen ist. Das kastenförmige Teil kann dabei außerdem in einfacher Weise mit Kupplungspunkten versehen sein, um weitere Rahmenteile anbringen zu können, wobei eines der Rahmenteile im Abstand von der Schwenklagerhülse ausklappbar ist zu einem mit der Hand anzufassenden Bedienungsbügel, um den Förderkarren verschieben zu können. Damit ist neben der Kupplungsstange ein zweites Element vorgesehen, und zwar an der anderen Seite des Förderkarrens, so daß dieses abhängig von dem, was gewünscht wird, sowohl in der einen als auch in der anderen Richtung sowohl geschoben als auch gezogen werden kann.

Unter Hinweis auf in der Zeichnung dargestellte Ausführungsformen wird der Förderkarren nach der Erfindung jetzt, sei es ausschließlich beispielsweise, näher erläutert werden. Dabei zeigt:
Fig. 1 in Seitenansicht eine erste Ausführungsform eines Förderkarrens nach der Erfindung in einer ersten Gebrauchsstellung;
Fig. 2 die rechte Ansicht von Fig. 1;
Fig. 3 in Seitenansicht die erste Ausführungsform des Förderkarrens nach der Erfindung in einer zweiten Gebrauchsstellung;
Fig. 4 die rechte Ansicht von Fig. 3;
Fig. 5 in Seitenansicht eine zweite Ausführungsform eines Förderkarrens nach der Erfindung in einer ersten Gebrauchsstellung;
Fig. 6 die rechte Ansicht von Fig. 5;
Fig. 7 in Seitenansicht die zweite Ausführungsform des Förderkarrens nach der Erfindung in einer zweiten Gebrauchsstellung;
Fig. 8 die rechte Ansicht von Fig. 7;
Fig. 9 in Seitenansicht eine Gelenkkonstruktion für eine Zugstange;
Fig. 10 einen Schnitt über die Linie X-X in Fig. 9;
Fig. 11 einen Schnitt über die Linie XI-XI in Fig. 9;
Fig. 12 in Draufsicht eine Kupplung in einer ersten Stellung;
Fig. 13 in Draufsicht eine Kupplung in einer zweiten Stellung; und
Fig. 14 eine Ansicht nach dem Pfeil A in Fig. 13.

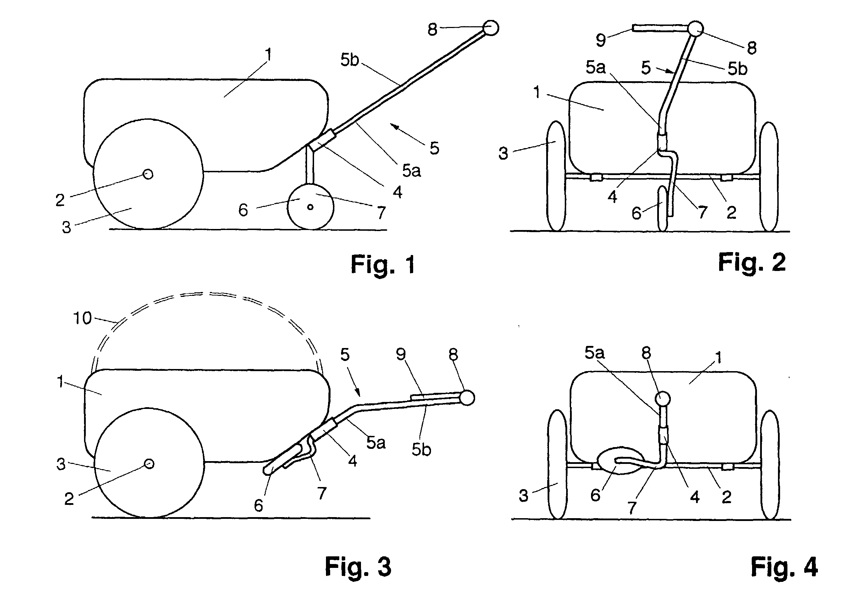

In Fig. 1-4 ist ein Förderkarren dargestellt, der mit einem Bodenteil 1 versehen ist, das die Form eines offenen Kastens aufweist, der eine Hauptachse 2 mit zwei Haupträdern 3 trägt. Die Hauptachse 2 ist verschoben zur Mitte des Bodenteiles 1 angeordnet gegen ein Ende, das die Rückseite des Förderkarrens bildet. Am anderen Ende des Bodenteiles 1, die Vorderseite des Förderkarrens, ist im unteren Bereich eine Schwenklagerhülse 4 angeordnet, deren Mittellinie in der Mittellotebene zwischen den Haupträdern 3 gelegen ist und sich geneigt aufwärts erstreckt. In der Schwenklagerhülse 4 befindet sich ein Teil 5a einer Kupplungsstange 5, der relativ zur Schwenklagerhülse 4 drehbar, jedoch in Längsrichtung nicht verschiebbar ist. Unter dem Bodenteil 1 ist an der Kupplungsstange 5 als Stützorgan ein Stützrad 6 verbunden mittels eines stangenförmigen Tragteiles 7, das im wesentlichen L-förmig ausgebildet ist und eine Achse zum Lagern des Stützrades 6 trägt. An dem von der Schwenklagerhülse 4 abgekehrten Ende des Teiles 5a schließt ein weiterer Teil 5b der Kupplungsstange 5 an, welcher Teil 5b relativ zum Teil 5a geknickt ist und in einer Kupplung 8 endigt, die weiter schwenkbar einen Handgriff 9 trägt.

Die Kupplungsstange 5 ist schwenkbar zwischen einer ersten Gebrauchsstellung, in der der Förderkarren als selbständige Einheit zu handhaben ist und die in Fig. 1 und 2 dargestellt ist, und einer zweiten Gebrauchsstellung, in der der Förderkarren als Anhänger hinter einem Fördermittel dient, zum Beispiel ein in der Zeichnung nicht gezeigtes Fahrrad, welche zweite Gebrauchsstellung in Fig. 3 und 4 dargestellt ist.

In der ersten Gebrauchsstellung ist die Kupplungsstange 5 derart geschwenkt, daß das Stützrad 6 sich in einer vertikal gerichteten Stellung mit seiner Achse parallel zur Hauptachse 2 befindet. Das Tragteil 7 stützt sich dabei gegen die Unterseite des Bodenteiles 1, wie am deutlichsten aus Fig. 2 hervorgeht, wodurch eine stabile Unterstützung erhalten wird. Falls gewünscht, kann das Tragteil 7 in dieser Stellung durch Klemmittel gesichert werden, zum Beispiel vom nachstehend besprochenen Typ. Beim Stützrad 6 in der so erhaltenen tragenden und sich am Boden abstützenden Stellung erstreckt der geknickte Teil 5b sich geneigt aufwärts, wie in Fig. 1 gezeigt, und geneigt seitwärts, wie in Fig. 2 gezeigt, relativ zum Teil 5a, und zwar derart, daß der ausgeklappte Handgriff 9 sich in einer komfortablen Anfaßhöhe befindet und eine Mitte aufweist, die relativ zum Stützrad 6 ausgerichtet ist.

Um den so als selbständige Einheit zu handhabenden Förderkarren zu zum Beispiel einem Anhänger umzubauen, oder von der ersten Gebrauchsstellung in die zweite Gebrauchsstellung zu bringen, braucht die Kupplungsstange 5 über nur etwa 90° geschwenkt und der Handgriff eingeklappt zu werden. Nach dieser Schwenkung liegt das Stützrad 6, wie in Fig. 3 und 4 gezeigt, gegen die Unterseite des Bodenteiles an. Weiter ist der Teil 5b der Kupplungsstange 5, wie aus deutlichsten aus Fig. 3 hervorgeht, in eine relativ zum Teil 5a abwärts geneigte Stellung gebracht, wobei der Teil 5b zugleich in der Mittellotebene zwischen die Haupträder 3 zu liegen gekommen ist. In dieser Stellung ist der Förderkarren schnell und einfach über die Kupplung 8, zum Beispiel vom nachstehend besprochenen Typ, mit einem Fördermittel zu verbinden, zum Beispiel ein Fahrrad. Dadurch, daß das umgeklappte Stützrad 6 sich gegen die Unterseite des Bodenteiles 1 stützt, wird wiederum eine durch Anschlag bestimmte, stabile Stellung erhalten, die selbstverständlich, falls gewünscht, wieder ergänzend mit geeigneten Befestigungsmitteln gesichert werden kann.

In Fig. 3 ist mit einer Strichlinie 10 ein Rahmenteil dargestellt, auf dem Abdeck- und Abschließmittel angebracht werden können.

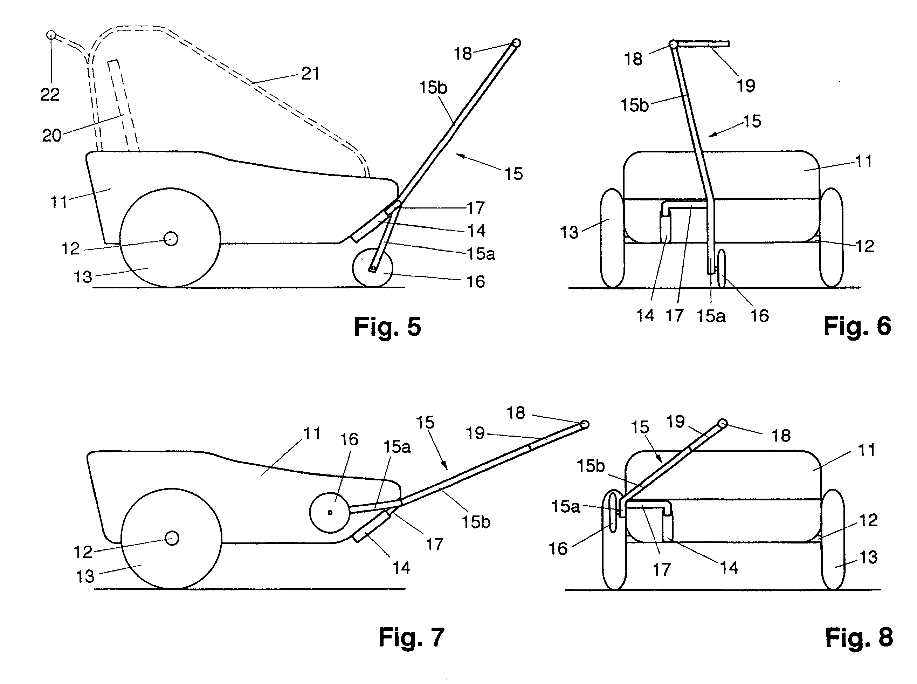

In Fig. 5-7 ist eine den Vorzug verdienende Ausführungsform des Förderkarrens nach der Erfindung dargestellt. Dieser Förderkarren ist mit einem Bodenteil 11, einer Hauptachse 12, Haupträdern 13, einer Schwenklagerhülse 14, einer Kupplungsstange 15, einem Stützrad 16, einem L-förmigen Schwenkteil 17, einer Kupplung 18 und einem Handgriff 19 versehen.

Gegenüber der Ausführungsform nach Fig. 1-4 ist die Schwenklagerhülse 14 jetzt etwa halbwegs in der Mittellotebene zwischen den Haupträdern 13 und einem der Haupträder 13 angeordnet. Das L-förmige Schwenkteil 17 ist mit einem Schenkel in der Schwenklagerhülse 14 gelagert, während der andere Schenkel die Kupplungsstange 15 auf der Höhe eines Knickes zwischen einem Tragteil 15a und einem Teil 15b trägt. Der Tragteil 15a trägt an seinem freien Ende über eine Achse das Stützrad 16, während das frei Ende des Teiles 15b mit der Kupplung 18, die den Handgriff 19 trägt, versehen ist.

Die erste Gebrauchsstellung, in der der Förderkarren als selbständige Einheit gehandhabt werden kann, ist in Fig. 5 und 6 dargestellt. Dabei befindet das Stützrad 16 sich im wesentlichen in der Mittellotebene zwischen den Haupträdern 13, ebenso wie die Mitte des ausgeklappten Handgriffs.

Um den Förderkarren von der ersten Gebrauchsstellung in die zweite zu bringen, wobei er geeignet ist, um durch ein Fördermittel gezogen zu werden, wird die Kupplungsstange 15 um 180° geschwenkt, womit die in Fig. 7 und 8 gezeigte Stellung erhalten wird, wobei das Stützrad 16 sich neben dem Bodenteil 11 befindet. Nach dem Einklappen des Handgriffs 19 ist die sich nahe der Mittellotebene zwischen den Haupträdern 13 befindende Kupplung 18 mit dem Fördermittel zu verbinden.

In der ersten Gebrauchsstellung ist der Förderkarren zum Beispiel als Kindersportwagen geeignet. Dazu kann im Bodenteil 11 ein Sitz 20 montiert sein. Weiter kann ein Rahmen 21 vorgesehen sein, der eine Abdeckung tragen kann und auch mit einem Bedienungsbügel 22 versehen sein kann, um den Förderkarren vorwärtsschieben zu können.

In beiden Gebrauchsstellungen stützt der sich dann jeweils horizontal erstreckende Teil des L-förmigen Schwenkteiles 17 gegen den Bodenteil 11, wodurch eine stabile Stützstellung erhalten wird. Selbstverständlich können dabei weitere Sicherungsmittel vorgesehen sein, die zum Beispiel federnd automatisch in und außer Betrieb gebracht werden können, so daß der Förderkarren mit einem einfachen Schwenken der Kupplungsstange von der einen in die andere Gebrauchsstellung zu bringen ist.

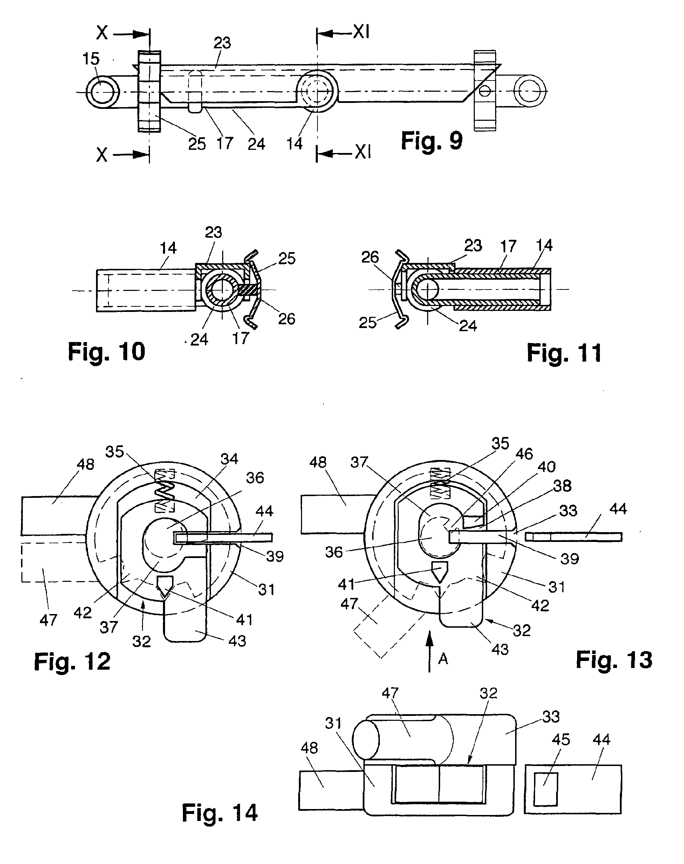

In Fig. 9-11 ist eine Variante zum Führen, Stützen und Sichern der Kupplungsstange 15 dargestellt. Dabei ist ein U-Profil 23 vorgesehen, das am Bodenteil 11 befestigt wird. Am U-Profil 23 ist die Schwenklagerhülse 14 befestigt, die eines der Schenkel des L-förmigen Schwenkteiles 17 aufnimmt. Der andere Schenkel des Schwenkteiles 17 ist in den beiden Gebrauchsstellungen im U-förmigen Profil 23 gelegen, wobei der andere Schenkel in diesen Stellungen jeweils am Ende des U-Profils 23 vorbei reicht, so daß die mit dem Schwenkteil 17 verbundene Kupplungsstange 15 frei vom U-Profil 23 bleibt, das so in beiden Gebrauchsstellungen den Schwenkteil 17 optimal abstützt. Vom U-Profil 23 kann weiter Gebrauch gemacht werden, um das Schwenkteil 17 in den beiden Gebrauchsstellungen zu sichern. Eine erste Möglichkeit dazu ist ein um das Schwenkteil 17 angebrachter Ring 24, hergestellt aus elastischem Material und versehen mit einem Außendurchmesser, der größer als die Innenabmessung des U-Profils 23 ist. Auf diese Weise muß das Schwenkteil 17 bei Annäherung an eine Gebrauchsstellung entgegen dem Widerstand des Ringes 24 im U-Profil 23 gedrückt werden, wodurch automatisch eine elastische Befestigung des Schwenkteiles 17 und folglich der Kupplungsstange 15 in beiden Gebrauchsstellungen erhalten wird. Eine andere Möglichkeit ist die Verwendung einer federnden Klammer 25, die mit einer Abstandsbuchse 26 auf dem Schwenkteil 17 befestigt ist und in den Gebrauchsstellungen festschnappend auf das U-Profil 23 wirksam wird. Um dies zu ermöglichen, ist das U-Profil 23 an seinen beiden Enden mit Abschrägungen versehen. Es wird bemerkt, daß eine derartige Klammer auch ohne U-Profil angewendet werden kann, wobei diese Klammer dann an geeignete Nocken angreifen muß, die am Bodenteil des Förderkarrens angebracht sind.

In Fig. 12-14 ist eine Kupplung dargestellt, mit der der Förderkarren an ein Fördermittel gekuppelt werden kann, aber die zugleich auch für eine Verriegelung des Handgriffs in der eingeklappten und der ausgeklappten Stellung sorgt.

Die Kupplung ist aus einer Unterschale 31, einem Klinkenteil 32 und einer Oberschale 33 zusammengesetzt. In Fig. 12 und 13 ist die Oberschale 33 nur mit Strichlinien bezeichnet, um die Wirkung der Kupplung so gut wie möglich verdeutlichen zu können.

Die Unterschale 31 ist mit einer nach einer Seite offenen Aussparung 34 versehen, in der das Klinkenteil 32 verschiebbar aufgenommen ist. Eine Druckfeder 35 ist vorhanden, die das Klinkenteil 32 aus der Aussparung 34 zu drücken sucht. Die Verschiebung des Klinkenteiles 32 wird durch eine Achse 36 begrenzt, die von der Oberschale 33 durch eine Schlitzlochöffnung 37 in das Klinkenteil 32 reicht bis zum Boden der Unterschale 31, wo die Achse 36 drehbar an der Unterschale 31 befestigt ist. Das Klinkenteil ist mit einer Einführöffnung 38 versehen, die von der Seite Zugang zur Schlitzlochöffnung 37 gewährt und dadurch in Flucht mit einem Einführschlitz 39 in der Unterschale 31 gebracht werden kann, daß das Klinkenteil entgegen der Kraft der Druckfeder 35 in die Aussparung 34 gedrückt wird. Eine Seite der Einführöffnung 38 ist als Stoßfläche gebildet, während die andere Seite die Form eines Riegelzahnes 40 aufweist. Das Klinkenteil 32 trägt einen Sicherungsnocken 41, der mit Sicherungsaussparungen 42 in der Oberschale 33 zusammenwirken kann. Das Klinkenteil 32 ist entgegen der Kraft der Druckfeder 35 mittels eines stets bis außerhalb der Unterschale 31 reichenden Knopfes 43 einzudrücken.

Die Kupplung ist bestimmt, um mit einem plattenförmigen Kupplungsorgan 44, das mit einer Öffnung 45 versehen ist, zusammenzuwirken. Dadurch, daß mittels des Knopfes 43 das Klinkenteil die Unterschale 31 eingedrückt wird, kommt die Einführöffnung 38 in Flucht mit dem Einführschlitz 39 zu liegen. Das Kupplungsorgan 44 ist dann in die Unterschale 31 und das Klinkenteil 32 zu stecken, wobei die Öffnung 45 vor den Riegelzahn 40 zu liegen kommt. Durch das Hinausfedernlassen des Klinkenteiles 32 wird der Riegelzahn 40 durch die Öffnung 45 reichen und verhindert er so, daß das Kupplungsorgan 44, mit dem die gewünschte Verbindung zustande gebracht und die in Fig. 12 gezeigte Stellung erreicht worden ist, aus der Kupplung gezogen werden kann.

Es wird bemerkt, daß in Fig. 12 das Kupplungsorgan 44, bis in einem Längsschlitz 46 angebracht, in die Achse 36 reicht. Dies bedeutet, daß das Kupplungsorgan 44 nur in die gekuppelte Stellung gebracht werden kann, wenn die Achse 36 eine solche Drehstellung aufweist, daß auch der Längsschlitz 46 in Flucht mit der Einführöffnung 38 und dem Einführschlitz 39 gelegen ist. Dies gibt die Möglichkeit, das Kuppeln nur stattfinden zu lassen, wenn der Handgriff sich in der eingeklappten Stellung befindet. Dazu wird der Handgriff an einem Zapfen 47, der mit der Oberschale 33 verbunden ist, und die Kupplungsstange mit einem Zapfen 48, der mit der Unterschale 31 verbunden ist, befestigt. Wie Fig. 12 zeigt, liegen die Zapfen 47 und 48 nebeneinander, das heißt der Handgriff ist eingeklappt, wenn das Kupplungsorgan 44 in den Längsschlitz 46 reicht. Ein ausgeklappter Handgriff ist in Fig. 13 gezeigt, aus der auch hervorgeht, daß die Achse 36 derart gedreht ist, daß dann das Kupplungsorgan 44 nicht weit genug in die Kupplung gesteckt werden kann, um den Riegelzahn 40 in die Öffnung 45 greifen zu lassen.

In Fig. 13 ist das Klinkenteil 32 in der eingedrückten Stellung gezeigt, wodurch der Sicherungsnocken 41 aus der Sicherungsaussparung 42 gebracht ist. In dieser Stellung sind die Unterschale 31 und die Oberschale 33 relativ zueinander drehbar, um den Handgriff ein- oder ausklappen zu können. Ein Loslassen des Knopfes 43 führt dann automatisch zum Verriegeln der Unter- und Oberschale in der betreffenden Stellung relativ zueinander, wie aus Fig. 12 hervorgeht, in der die Verriegelung in der eingeklappten Stellung gezeigt ist.

Eine weitere Verfeinerung ist zu erreichen, wenn der in Fig. 12 unten liegende Seitenrand des Längsschlitzes 46 in der Verlängerung des Bodens des Längsschlitzes 46 entfernt wird. Eine Drehung der Achse 36 durch Drehen der Oberschale 33 in die in Fig. 13 gezeigte Stellung ist dann bei eingedrücktem Klinkenteil 32 möglich und hat automatisch zur Folge, daß das Kupplungsorgan 44 nach rechts aus der Oberschale 31 gedrückt wird.

Es versteht sich, daß im Rahmen der Erfindung, wie in den beiliegenden Ansprüchen niedergelegt, noch viele Varianten und Abwandlungen möglich sind. So ist es zum Beispiel möglich, statt eines Stützrades ein Stützbein anzubringen. Obwohl das Bodenteil stets als ein einteiliges Teil dargestellt ist, kann es auch aus mehreren Teilen zusammengesetzt sein und zum Beispiel mit einem rohrförmigen Tragrahmen versehen sein. Weiter kann die Kupplungsstange in einfacher Weise demontierbar in der Schwenklagerhülse angebracht sein. Dies hat nicht nur Vorteile beim Bedienen des Förderkarrens mittels des Bügels 22, sondern erleichtert auch die Lagerung und Beförderung, wozu es weiter den Vorzug verdient, auch die Haupträder 13 schnell demontierbar anzubringen.

## Patentansprüche

1. Förderkarren, versehen mit einem Bodenteil mit zwei auf eine Hauptachse rotierbar montierten Haupträdern und einer Kupplungsstange, die einerseits mit dem Bodenteil verbunden ist und andererseits ein Ende aufweist, das, um den Förderkarren fortbewegen zu können, mit Anfaßmitteln versehen ist, die mit einer Hand angefaßt werden können oder mit Organen kuppelbar sind, die mit einem Fördermittel, wie ein Fahrrad, verbunden sind, welche Kupplungsstange ein Stützorgan trägt und um eine Achse schwenkbar ist zwischen einer ausgeklappten Stellung, wobei das Stützorgan einen ergänzenden Stützpunkt bildet, und einer hochgeklappten Stellung, wobei das Stützorgan sich in einer relativ zu seiner Position in der ausgeklappten Stellung in Richtung des Bodenteiles geschwenkten Stellung befindet, **dadurch gekennzeichnet, daß** die Verlängerung der Schwenkachse der Kupplungsstange die Hauptachse schneidet oder kreuzt und das Stützorgan über einen sich quer zur Schwenkachse erstreckenden, stangenförmigen Teil mit der Kupplungsstange verbunden ist.

2. Förderkarren nach Anspruch 1, **dadurch gekennzeichnet, daß** die Schwenkachse der Kupplungsstange in einer Ebene gelegen ist, die sich wenigstens nahezu lotrecht zur Hauptachse erstreckt.

3. Förderkarren nach Anspruch 2, **dadurch gekennzeichnet, daß** die Schwenkachse gelegen ist in einer Ebene wenigstens nahezu parallel zu und zwischen einer Mittellotebene zwischen den zwei Haupträdern und einer Ebene durch eines der zwei Haupträder.

4. Förderkarren nach Anspruch 3, **dadurch gekennzeichnet, daß** das Stützorgan sich in der ausgeklappten Stellung etwa in einer Ebene befindet, die mit einer Mittellotebene zwischen den zwei Haupträdern zusammenfällt und in der hochgeklappten Stellung ein Ende aufweist, das im wesentlichen neben dem Bodenteil gelegen ist.

5. Förderkarren nach einem der vorhergehenden Ansprüche, **dadurch gekennzeichnet, daß** das Ende des Stützorgans in der hochgeklappten Stellung sich in einer Ebene befindet, die im wesentlichen parallel ist oder zusammenfällt mit einer Ebene durch eines der beiden Haupträder.

6. Förderkarren nach Anspruch 5, **dadurch gekennzeichnet, daß** die Schwenkachse durch eine durch das Bodenteil getragene Schwenklagerhülse bestimmt wird und die Kupplungsstange versehen ist mit einem stangenförmigen Tragteil, das das Stützorgan trägt, einem stangenförmigen Bedienungsteil, das in Längsrichtung an das Tragteil anschließt, einem stangenförmigen Verbindungsteil, das sich im wesentlichen lotrecht zu dem Tragteil und dem Bedienungsteil erstreckt an der Stelle, wo diese Teile aneinander anschließen, und einer Schwenkachse, die sich im wesentlichen lotrecht zum Verbindungsteil erstreckt und zusammen mit diesem eine Ebene bestimmt, mit der das Tragteil einen Winkel einschließt, sowie drehbar in die Schwenklagerhülse paßt.

7. Förderkarren nach Anspruch 6, **dadurch gekennzeichnet, daß** das Verbindungsteil ein Befestigungsorgan trägt, mit dem die Kupplungsstange in ihren beiden äußersten Schwenkstellungen am Bodenteil befestigt werden kann.

8. Förderkarren nach Anspruch 7, **dadurch gekennzeichnet, daß** das Befestigungsorgan eine federnde Klemme ist, die mit zwei gegenüberliegenden, federnden Klemmarmen versehen ist, die je mit jeweils einem am Bodenteil angebrachten Nocken zusammenwirken können.

9. Förderkarren nach einem der Ansprüche 6-8, **dadurch gekennzeichnet, daß** das Bedienungsteil einen stumpfen Winkel mit dem Tragteil einschließt und sich von seinem Anschluß an das Tragteil über eine solche Länge in einer solchen Richtung erstreckt, daß das Bedienungsteil in einem Ende endigt, das relativ zum Tragteil an der Schwenkachse vorbei in Richtung der Mittellotebene gelegen ist.

10. Förderkarren nach einem der Ansprüche 6-9, **dadurch gekennzeichnet, daß** die Schwenklagerhülse an einer unteren Fläche des Bodenteiles befestigt ist, welches Bodenteil die Anschläge zum Begrenzen der Schwenkbewegung der Kupplungsstange vorsieht.

11. Förderkarren nach einem der Ansprüche 6-10, **dadurch gekennzeichnet, daß** ein Ende der Schwenklagerhülse in einen Durchbruch eines Schenkels eines U-förmigen Profils ausmündet, das wenigstens nahezu quer zur Mittellotebene am Bodenteil befestigt ist und sich an beiden Seiten der Ausmündung der Schwenklagerhülse über eine Länge erstreckt, die kleiner ist als die des Verbindungsteiles, das einen in das U-förmige Profil passenden Querschnitt aufweist.

12. Förderkarren nach Anspruch 11, **dadurch gekennzeichnet, daß** das Verbindungsteil an seinem Außenumfang ein Organ aus einem elastischen Material trägt, mit dem das Verbindungsteil in beiden äußersten Schwenkstellungen der Kupplungsstange klemmend im U-Profil zu befestigen ist.

13. Förderkarren nach einem der vorhergehenden Ansprüche, **dadurch gekennzeichnet, daß** die Anfaßmittel einen Handgriff umfassen, der schwenkbar ist zwischen einer verriegelbaren, eingeklappten Stellung, in der der Handgriff sich im wesentlichen parallel zum Bedienungsteil erstreckt, und einer ausgeklappten Stellung, in der der Handgriff sich unter einem Winkel zum Bedienungsteil erstreckt.

14. Förderkarren nach Anspruch 13, **dadurch gekennzeichnet, daß** die Anfaßmittel weiter eine Fördermittelkupplung umfassen, die nur wirksam sein kann, wenn der Handgriff sich in der eingeklappten Stellung befindet, und der Handgriff sowohl in der eingeklappten als auch in der ausgeklappten Stellung verriegelt.

15. Förderkarren nach einem der vorhergehenden Ansprüche, **dadurch gekennzeichnet, daß** das Stützorgan als Stützpunkt ein Stützrad trägt.

16. Förderkarren nach einem der vorhergehenden Ansprüche, **dadurch gekennzeichnet, daß** das Bodenteil mit einem stangenförmigen Rahmenteil und einem durch dieses getragenen kastenförmigen Teil versehen ist.

17. Förderkarren nach Anspruch 16, **dadurch gekennzeichnet, daß** das kastenförmige Teil mit Kupplungspunkten versehen ist, um weitere Rahmenteile anbringen zu können, wobei eines der Rahmenteile im Abstand von der Schwenklagerhülse ausklappbar ist zu einem mit der Hand anzufassenden Bedienungsbügel, um den Förderkarren verschieben zu können.
